# EUROPÄISCHE PATENTSCHRIFT

(11) **EP 2 340 919 B1**
(45) Veröffentlichungstag und Bekanntmachung des Hinweises auf die Patenterteilung: **02.07.2014**
(21) Anmeldenummer: 10194300.9
(22) Anmeldetag: 09.12.2010
(51) Int. Cl.: B26D 1/18, B32B 37/00, B32B 38/00, B43M 99/00

(54) **Einheit aus einem elektrischen Bürogerät zur Herstellung von Dokumenten und einem zugehörigen Dokumentenschneidegerät**
Unit comprising an electric office device for producing documents and a document cutting device
Unité constituée d'un appareil de bureau électrique pour la fabrication de documents et d'un appareil de coupe de documents approprié

(30) Priorität: 31.12.2009 DE 202009017649 U
(43) Veröffentlichungstag der Anmeldung: 06.07.2011
(73) Patentinhaber: Kompernass Handelsgesellschaft MbH, 44867 Bochum (DE)
(72) Erfinder: Peer Linden, Christian, 44867 Bochum (DE)
(74) Vertreter: Nunnenkamp, Jörg

(56) Entgegenhaltungen:
- DE-U1-202005 017 904
- JP-A- 2003 040 513
- US-A1- 2003 010 170
- US-A1- 2005 141 936

## Beschreibung

Die Erfindung betrifft eine Einheit aus einem elektrischen Bürogerät zur Herstellung von Dokumenten und einem zugehörigen Dokumentenschneidegerät, insbesondere Laminiergerät mit Schneideeinrichtung, wobei das Bürogerät mit einem Gehäuse mit einem Einlass sowie einer Auflage für Trägermaterial und einem Auslass für daraus hergestellte Dokumente ausgerüstet ist.

Eine Einheit des eingangs beschriebenen Aufbaus wird beispielhaft in dem Gebrauchsmuster DE 20 2005 017 904 U1 vorgestellt. Hier geht es um ein Laminiergerät mit einer Schneideanordnung. Die Schneideanordnung ist entlang einer Schiene bewegbar, um einen Gegenstand bzw. ein im Laminiergerät hergestelltes Dokument schneiden zu können. Das hat sich grundsätzlich bewährt.

Ganz abgesehen davon existieren unabhängig von elektrischen Bürogeräten Blattgutbearbeitungsgeräte, wie sie beispielsweise im Gebrauchsmuster DE 20 2008 010 684 U1 beschrieben werden. Mit ihrer Hilfe lassen sich beispielsweise Dokumente auf eine gewünschte Größe zurecht schneiden. Auch variable randseitige Ausgestaltungen eines Dokumentes können mit Hilfe derartiger Blattgutbearbeitungsgeräte realisiert werden. Im nächstkommenden Stand der Technik nach der US 2003/010170 A wird die Kombination aus einem Bürogerät und einer Auflage für Trägermaterial beschrieben. Bei der Auflage handelt es sich um ein abnehmbares Dokumentenschneidegerät. Zur lösbaren Festlegung der Auflage am Gehäuse sind verschiedene zusammenwirkende Verriegelungsmaßnahmen erforderlich.

Der Stand der Technik hat sich grundsätzlich bewährt, stößt jedoch dann an Grenzen, wenn es darum geht, bei dem bekannten Laminiergerät nach der DE 20 2005 017 904 U1 bestimmte Schneidvorgänge vornehmen zu wollen. Denn gezielt vorgegebene Konturen des hergestellten Dokumentes lassen sich mit der bekannten Schneideanordnung entsprechend der DE 20 2005 017 904 U1 nur schwer realisieren. Aus diesem Grund werden mit der bekannten Schneideanordnung primär lediglich Kanten des laminierten Gegenstandes bearbeitet. Bei dieser Vorgehensweise fällt auf, dass das hergestellte Dokument zusätzlich von einem Bediener gehalten und ausgerichtet werden muss. Das ist einer einfachen und zuverlässigen Bedienung und insbesondere einem einwandfreien Schneidevorgang abträglich. Hier will die Erfindung insgesamt Abhilfe schaffen.

Der Erfindung liegt das technische Problem zugrunde, eine derartige Einheit aus einem elektrischen Bürogerät und einem zugehörigen Dokumentenschneidegerät so weiter zu entwickeln, dass die Bedienung erleichtert ist und insbesondere gezielte Schneidevorgänge vorgenommen werden können.

Zur Lösung dieser technischen Problemstellung ist Gegenstand der Erfindung eine Einheit nach Anspruch 1. Das heißt, erfindungsgemäß fungiert die Auflage zugleich als Dokumentenschneidegerät. Oder anders ausgedrückt, übernimmt das Dokumentenschneidegerät zugleich die Funktion als Auflage für das Trägermaterial im Bereich des Einlasses am Gehäuse. - Bei der Einheit handelt es sich im Allgemeinen um eine Verkaufseinheit. Das heißt das Bürogerät und das Dokumentenschneidegerät bzw. die Auflage werden zusammen verkauft. Grundsätzlich ist natürlich auch eine Baueinheit denkbar.

Dabei wird üblicherweise so vorgegangen, dass die Auflage im Herstellungsmodus des zugehörigen Dokumentes das Trägermaterial in der Art einer Unterstützungsfläche aufnimmt und als gleichsam Speicher oder Speicherunterlage für das Trägermaterial arbeitet. Dagegen wird die Auflage im Schneidemodus vom Gehäuse getrennt betrieben und fungiert als Dokumentenschneidegerät. Hierbei geht die Erfindung von der Erkenntnis aus, dass von einem Bediener die Herstellung von Dokumenten und das Zurechtschneiden des fraglichen Dokumentes immer getrennt voneinander und meistens zeitlich hintereinander vorgenommen werden.

Dadurch kann die Auflage im Herstellungsmodus wie beschrieben als Speicherunterlage bzw. Unterstützungsfläche für das Trägermaterial fungieren. Sobald das gewünschte Dokument oder die mehreren Dokumente hergestellt worden sind, wird die Auflage vom Gehäuse abgenommen. Dann fungiert die Auflage im Schneidemodus als vom Gehäuse getrennt ausgelegtes Dokumentenschneidegerät. Auf diese Weise übernimmt die Auflage eine zweifache Funktion nämlich als Unterstützungsfläche im Herstellungsmodus und als Dokumentenschneidegerät im Schneidemodus, die bisher und in dieser Ausprägung nicht bekannt war.

Um die einfache Trennung von einerseits dem Gehäuse und andererseits der an das Gehäuse abnehmbar angeschlossenen Auflage bzw. dem Dokumentenschneidegerät im Detail zu realisieren, verfügt die Auflage über zumindest ein Rastelement, welches in ein Gegenrastelement im Gehäuse lösbar eingreift. Grundsätzlich kann auch umgekehrt vorgegangen werden. Dann ist die Auflage mit dem Gegenrastelement ausgerüstet, wohingegen das Gehäuse über das Rastelement verfügt.

Erfindungsgemäß sind randseitig der Auflage jeweils Rastzungenpaare realisiert. Dabei finden zwei Rastzungenpaare ihren Niederschlag. Im Einzelnen umgreift das jeweilige Rastzungenpaar einen zugehörigen Rastzapfen. Dieser Rastzapfen findet sich in der Rastausnehmung im Gehäuse. Um die Auflage mit dem Gehäuse lösbar zu verbinden, wird das jeweilige Rastzungenpaar in die Rastausnehmung mit dem Rastzapfen eingesteckt. Bei diesem Vorgang federn die beiden Rastzungen des Rastzungenpaares auf und umgreifen den Rastzapfen. Zum Lösen der Auflage von dem Gehäuse ist es lediglich erforderlich, die Auflage mit Zug zu beaufschlagen, damit sich die beiden den Rastzapfen umgreifenden Rastzungen von dem Rastzapfen (wieder) lösen können.

Im Allgemeinen ist die Auflage zweiteilig ausgebildet. Tatsächlich setzt sich die Auflage meistens aus einem Formatierungsteil und einem Schneideteil zusammen. Dabei können beide Teile bzw. Bestandteile der Auflage drehgelenkig miteinander verbunden werden. Im Herstellungsmodus fungiert lediglich das Formatierungsteil als Auflage und gleichsam Unterstützungsfläche für das Trägermaterial. Dagegen ist das Schneideteil demgegenüber abgeklappt und dient nicht als Auflagefläche. Damit die Auflagefläche bzw. das Formatierungsteil bedarfsweise vergrößert werden kann, verfügt das Formatierungsteil im Allgemeinen an seiner gehäusefernen Kante über einen wahlweise ausziehbaren Verlängerungssteg. Dieser Verlängerungssteg muss selbstverständlich eingeschoben werden, sobald die Auflage als Dokumentenschneidegerät fungiert. Denn in diesem Fall werden das Formatierungsteil und das Schneideteil parallel auf einer Unterstützungsfläche, beispielsweise einer Tischfläche, abgelegt und dienen dazu, das zuvor hergestellte Dokument oder die mehreren hergestellten Dokumente größenmäßig zuzuschneiden.

Damit dieser Schneidevorgang exakt und reproduzierbar vorgenommen werden kann, verfügt die Auflage bzw. das Formatierungsteil über verstellbare Seitenanschläge. Mit Hilfe dieser Seitenanschläge lässt sich das zu bearbeitende Dokument seitlich fixieren, so dass mit Hilfe der Schneideeinrichtung beispielsweise die Länge des Dokumentes auf das gewünschte Maß gebracht werden kann.

Dieser Vorgang geschieht in der Regel dergestalt, dass die Schneideeinrichtung als Rollenschneideeinrichtung ausgebildet ist. Das heißt, den formatierenden Schnitt an dem zu bearbeitenden Dokument übernimmt eine Schneidrolle, die rollend und zugleich schneidend entlang einer zu bearbeitenden Linie über und durch das Dokument geführt wird. Im Anschluss daran steht eine einwandfreie Schneidekante zur Verfügung. Damit bei diesem Vorgang die Rollenschneideeinrichtung eine einwandfreie Führung erfährt, ist eine Führungsschiene vorgesehen. Diese sorgt dafür, dass die Rollenschneideeinrichtung in Gehäuselängsrichtung bzw. parallel zur Gehäuselängsrichtung an der fraglichen Führungsschiene geführt wird.

Im Allgemeinen findet sich die Führungsschiene auf dem Schneideteil. Außerdem mag die Führungsschiene zusammen mit der Rollenschneideeinrichtung abklappbar an die Auflage respektive das Schneideteil im Speziellen angeschlossen sein.

Um dies im Detail zu realisieren, ist die Führungsschiene vorteilhaft mit einer mittigen Führungsnut ausgerüstet. In diese Führungsnut greift ein Führungssteg ein. Dieser Führungssteg findet sich in der Regel unterseitig der Rollenschneideeinrichtung. Auf diese Weise wird die Rollenschneideeinrichtung entlang der Führungsschiene geführt, indem der unterseitige Führungssteg der Rollenschneideeinrichtung in die mittige Führungsnut der Führungsschiene eingreift.

Damit sich an dieser Stelle reproduzierbare und vorgebbare Ergebnisse erzielen lassen, ist die Führungsschiene in der Regel als Lineal ausgebildet.

Das heißt, die Führungsschiene verfügt über wenigstens eine Markierung, um beispielsweise einen Schnitt einstellbarer Länge mit Hilfe der Rollenschneideeinrichtung setzen zu können. Dabei hat es sich bewährt, wenn unterschiedliche Skalierungen an dem Lineal abgebildet werden, beispielsweise eine Zentimeter-Skalierung oder eine Inch- oder Zoll-Skalierung. Das ist selbstverständlich lediglich beispielhaft und nicht einschränkend zu verstehen.

Bei dem elektrischen Bürogerät handelt es sich um jedwedes Bürogerät, welches zur Herstellung von Dokumenten aus Papier, Pappe, Folie etc. geeignet ist. Im einfachsten Fall kann es sich bei dem Bürogerät um einen Drucker oder auch ein Faxgerät handeln. Nach besonders vorteilhafter Ausgestaltung ist das elektrische Bürogerät jedoch als Laminiergerät ausgebildet. Bekanntermaßen bezeichnet die Lamination das Verbinden einer dünnen und oftmals folienartigen Schicht mit zugehörigem Trägermaterial mittels eines Klebers. Bei dem Trägermaterial mag es sich um einen bedruckten Papierbogen, ein bedrucktes Stück Pappe, ein Papierblatt, ein Etikett oder ein vergleichbares Dokument handeln, welches mit Hilfe der Lamination beispielsweise vor Umwelteinflüssen geschützt werden soll. Tatsächlich sind laminierte Dokumente absolut wasserbeständig und abwaschbar. Außerdem lässt sich durch das Laminieren die Fälschungssicherheit steigern, da ein nachträgliches Bearbeiten des eingeschweißten Trägermaterials nicht ohne erheblichen Aufwand möglich ist. Aus diesem Grund werden beispielsweise Personalausweise laminiert. Selbstverständlich können auch Fotos, Speisekarten, Aushänge etc. laminiert werden.

Das elektrische Bürogerät im Allgemeinen bzw. das Laminiergerät im Besonderen verfügt im Innern über einen herkömmlichen Aufbau mit einer Aufnahmekammer zur Aufnahme einer Zufuhrrolle für die aufzubringende Folie, einer Blatt-Übertragungsrolle und einem Heizelement. Indem das Trägermaterial, beispielsweise ein bedrucktes Blatt Papier, in den Einlass eingeführt wird, wird das fragliche Trägermaterial an der Vorder- und Rückseite mit der beschriebenen folienartigen Schicht bedeckt. Dazu wird das Papier in die Folie eingelegt und in dem Laminiergerät über das bereits angesprochene Heizelement bzw. eine heiße Rolle geführt. Hierdurch wird der Kunststoff bei etwa 60° C bis 80° C oberseitig und unterseitig des Trägermaterials thermisch miteinander verbunden und der innenseitig der Folientasche vorgesehene und bei Zimmertemperatur feste Klebstoff verschmilzt mit dem Dokument bzw. vormaligen Trägermaterial. Ausgangsseitig des Laminiergerätes steht dann das gewünschte und in der beschriebenen Art und Weise hergestellte Dokument zur Verfügung. Das Dokument lässt sich zum Abschluss mit Hilfe der Auflage bzw. dem Dokumentenschneidegerät randseitig bearbeiten, so dass das Dokument das gewünschte außenumfangsseitige Format und auch die geforderte Größe aufweist. Hierin sind die wesentlichen Vorteile zu sehen.

Im Folgenden wird die Erfindung anhand einer lediglich ein Ausführungsbeispiel darstellenden Zeichnung näher erläutert. Es zeigen:
- **Fig. 1**: die erfindungsgemäße Einheit in einer perspektivischen Ansicht und
- **Fig. 2**: die Auflage bzw. das Dokumentenschneidegerät in einer Aufsicht.

In den Figuren ist eine Einheit (Verkaufseinheit) aus einem elektrischen Bürogerät 1 und einem zugehörigen Dokumentenschneidegerät 2 dargestellt. Das elektrische Bürogerät 1 dient zur Herstellung von Dokumenten. Vorliegend handelt es sich bei dem elektrischen Bürogerät 1 um ein Laminiergerät 1, welches in seinem grundsätzlichen Aufbau mit einem Gehäuse 3 mit Einlass 4 und Auslass 5 ausgerüstet ist. Der Einlass 4 ist mit einer Auflage 2 für Trägermaterial ausgebildet. Über den Auslass 5 verlassen die aus dem Trägermaterial hergestellten Dokumente als Laminate das Gehäuse 3 bzw. das Laminiergerät 1.

Bei den mit Hilfe des Laminiergerätes 1 hergestellten Dokumenten handelt es sich um Laminate, die mit Hilfe des Dokumentenschneidegerätes 2 größenmäßig formatiert werden bzw. eine randseitige Bearbeitung durch Schneiden erfahren. Man erkennt, dass erfindungsgemäß die Auflage 2 am Gehäuse 3 als abnehmbares Dokumentenschneidegerät 2 ausgebildet ist. Das heißt, die Auflage 2 und das Dokumentenschneidegerät 2 formen ein und dasselbe Bauteil bzw. sind synonym.

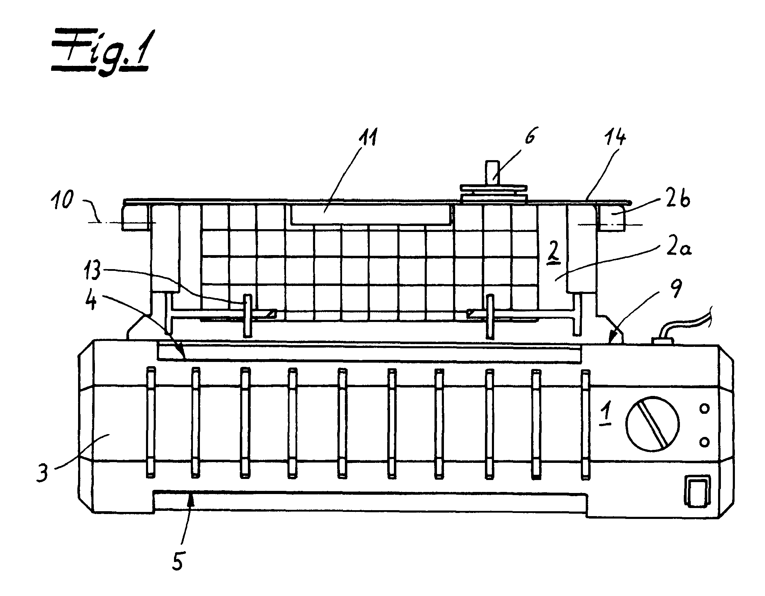

Tatsächlich fungiert die Auflage 2 im Herstellungsmodus entsprechend der Darstellung nach Fig. 1 als Unterstützungsfläche für auf der Auflage 2 aufgenommenes Trägermaterial. Bei diesem Trägermaterial mag es sich um einzelne zu laminierende Papiere, Pappen, Fotos etc. handeln. Das heißt, die Auflage 2 dient als Unterstützungsfläche bzw. Auflagefläche für das anschließend in dem Laminiergerät 1 zu laminierende Trägermaterial. Dadurch können problemlos auch mehrere Blatt Papier im Sinne eines Stapels hintereinander bearbeitet bzw. laminiert werden. Außerdem erfährt das zu bearbeitende bzw. zu laminierende Trägermaterial eine Unterstützung durch die Auflage 2, so dass Fehlfunktionen praktisch ausgeschlossen sind.

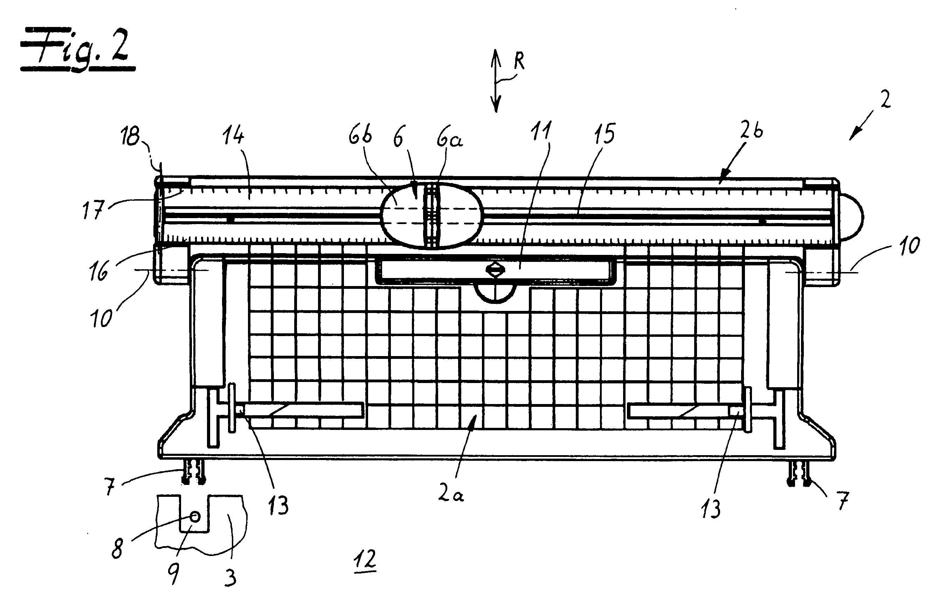

Nachdem auf diese Weise aus dem Trägermaterial die gewünschten Dokumente hergestellt worden sind, indem das Trägermaterial im Innern des Laminiergerätes 1 in die Folientasche eingeführt und die Folie mit dem Trägermaterial verschmolzen worden ist, verlässt das solchermaßen laminierte Trägermaterial als Dokument das Gehäuse 3 über den Auslass 5. Die auf diese Weise hergestellten Dokumente können danach größenmäßig formatiert werden bzw. eine schneidende Bearbeitung an ihren Kanten erfahren. Hierzu dient die Auflage bzw. das Dokumentenschneidegerät 2 im sogenannten Schneidemodus. In diesem Schneidemodus ist die Auflage bzw. das Dokumentenschneidegerät 2 vom Gehäuse 3 getrennt. Das zeigt die Fig. 2. Tatsächlich lässt sich in dem Schneidemodus entsprechend der Fig. 2 das jeweilige Dokument mit Hilfe einer Schneideeinrichtung 6 beispielsweise randseitig bearbeiten.

Um die beschriebene lösbare Verbindung zwischen der Auflage bzw. dem Dokumentenschneidegerät 2 und dem Gehäuse 3 im Detail zu realisieren, verfügt die Auflage 2 über zwei randseitig der Auflage vorgesehene Rastzungenpaare 7. Die beiden Rastzungenpaare 7 finden sich an einer gehäusenahen Längskante der Auflage 2. Die Rastzungenpaare 7 umgreifen jeweils einen Rastzapfen 8, sobald die Auflage bzw. das Dokumentenschneidegerät 2 mit dem Gehäuse 3 in Funktionsstellung lösbar verbunden ist. Der Rastzapfen 8 befindet sich im Innern einer Rastaufnahme 9 des Gehäuses 3. Das deutet die Fig. 2 an. Man erkennt, dass durch ziehende oder drückende Beaufschlagung in Richtung R die Auflage bzw. das Dokumentenschneidegerät 2 jeweils mit dem Gehäuse 3 lösbar verbunden oder von dem Gehäuse 3 wieder getrennt werden kann.

Anhand der Fig. 2 wird deutlich, dass die Auflage bzw. das Dokumentenschneidegerät 2 zweiteilig ausgelegt ist. Tatsächlich finden sich einerseits ein Formatierungsteil 2a und andererseits ein Schneideteil 2b. Beide Bestandteile 2a, 2b der Auflage 2 sind drehgelenkig miteinander verbunden, und zwar über eine Drehachse 10. Im Herstellungsmodus des Trägermaterials ist das Schneideteil 2b von dem Formatierungsteil 2a abgeklappt, wie man anhand der Fig. 1 erkennt. Dadurch ist auch die Schneideeinrichtung 6 gegenüber dem Formatierungsteil 2a abgeklappt, welches einzig und allein als Unterstützungsfläche für das zu bearbeitende Trägermaterial fungiert. Ein wahlweise ausziehbarer Verlängerungssteg 11 am Formatierungsteil 2a mag dazu dienen, das Formatierungsteil 2a der Auflage 2 bei Bedarf größenmäßig zu verlängern. Sobald jedoch die Auflage bzw. das Dokumentenschneidegerät 2 von dem Gehäuse 3 entfernt ist und der Schneidemodus entsprechend der Fig. 2 vorliegt, ist der Verlängerungssteg 11 eingeschoben. Denn dann ist das Schneideteil 2b nicht mehr gegenüber dem Formatierungsteil 2a abgeklappt, sondern liegen beide Bestandteile 2a, 2b ausgestreckt auf einer Unterstützungsfläche 12, beispielsweise einer Tischoberfläche 12, auf.

Man erkennt, dass die Auflage 2 bzw. das Formatierungsteil 2a mit verstellbaren Seitenanschlägen 13 ausgerüstet ist. Auf diese Weise kann eine Anpassung an die Breite des zu verarbeitenden Trägermaterials bzw. des zu schneidenden Dokumentes erfolgen und wird das Trägermaterial zwischen den beiden verstellbaren Seitenanschlägen 13 einwandfrei in den Einlass 4 des Laminiergerätes 1 eingeführt bzw. im Vergleich zu der Schneideeinrichtung ausgerichtet.

Bei der Schneideeinrichtung 6 handelt es sich im Ausführungsbeispiel um eine Rollenschneideeinrichtung 6. Diese Rollenschneideeinrichtung 6 ist mit einem oberseitigen Griffteil 6a zur manuellen Beaufschlagung und einem unterseitigen Führungssteg 6b ausgerüstet. In den Führungssteg 6b ist ein Rollenmesser bzw. eine Schneiderolle eingelassen. Mit Hilfe des Führungssteges 6b wird die Rollenschneideeinrichtung 6 in oder gegenüber einer Führungsschiene 14 geführt. Tatsächlich verfügt die Führungsschiene 14 über eine mittige Führungsnut 15, in welche der unterseitige Führungssteg 6b der Rollenschneideeinrichtung 6 eingreift. Bei einer Hin- und Herbewegung der Rollenschneideeinrichtung 6 entlang der Führungsschiene 14 wird das im unterseitigen Führungssteg 6b aufgenommene Rollenmesser bzw. die über die Oberfläche des Dokumentes geführt und sorgt dafür, dass entlang der solchermaßen definierten Schnittlinie etwaige überstehende Bereiche des zu bearbeitenden Dokumentes abgetrennt werden.

Bei der Führungsschiene 14 handelt es sich im Rahmen des Ausführungsbeispiels um ein Lineal mit Skalierung 16, 17. Tatsächlich finden sich unterschiedliche Skalierungen 16, 17 beidseitig der mittigen Führungsnut 15. Dabei mag eine Skalierung 16 als Inch-Skalierung ausgelegt sein, während die andere Skalierung 17 als Zentimeter-Skalierung ausgebildet ist.

Die Führungsschiene 14 ist insgesamt abklappbar an die Auflage 2 bzw. das Schneideteil 2b angeschlossen. Zu diesem Zweck ist die Führungsschiene 14 über ein Drehgelenk 18 drehgelenkig einseitig an die Auflage 2 bzw. das Schneideteil 2b angelenkt. Dadurch kann das zu bearbeitende Dokument bei abgeklappter Führungsschiene und demzufolge auch abgeklappter Rollenschneideeinrichtung 6 zunächst auf die Auflage 2 aufgelegt werden. Erst im Anschluss daran wird die Führungsschiene 14 zusammen mit der Rollenschneideeinrichtung 6 aufgelegt und erfolgt dann der gewünschte schneidende Bearbeitungsvorgang.

## Patentansprüche

1. Einheit aus einem elektrischen Bürogerät (1) zur Herstellung von Dokumenten und einem zugehörigen Dokumentenschneidegerät (2), insbesondere Laminiergerät (1) mit Schneideeinrichtung (6), wobei
- das Bürogerät (1) mit einem Gehäuse (3) mit einem Einlass (4) sowie einer Auflage (2) für Trägermaterial und einem Auslass (5) für daraus hergestellte Dokumente ausgerüstet ist, wobei ferner
- die Auflage (2) als vom Gehäuse (3) abnehmbares Dokumentenschneidegerät (2) ausgebildet ist, wobei weiter
- zwei randseitig der Auflage (2) vorgesehene Rastzungenpaare (7) realisiert sind, die einen jeweiligen Rastzapfen (8) in einer Rastausnehmung (9) im Gehäuse (3) lösbar umgreifen, und wobei
- durch ziehende oder drückende Beaufschlagung in Querrichtung (R) die Auflage (2) bzw. das Dokumentenschneidegerät (2) jeweils mit dem Gehäuse (3) lösbar verbunden oder von dem Gehäuse (3) wieder getrennt werden kann.

2. Einheit nach Anspruch 1, **dadurch gekennzeichnet, dass** die Auflage (2) im Herstellungsmodus das Trägermaterial in der Art einer Unterstützungsfläche aufnimmt.

3. Einheit nach Anspruch 1 oder 2, **dadurch gekennzeichnet, dass** die Auflage (2) im Schneidemodus vom Gehäuse (3) getrennt als Dokumentenschneidegerät (2) fungiert.

4. Einheit nach einem der Ansprüche 1 bis 3, **dadurch gekennzeichnet, dass** die Auflage (2) mit zumindest einem Rastelement (7) in ein Gegenrastelement (8) im Gehäuse (3) lösbar eingreift, oder umgekehrt.

5. Einheit nach einem der Ansprüche 1 bis 4, **dadurch gekennzeichnet, dass** die Auflage (2) zweiteilig mit Formatierungsteil (2a) und Schneideteil (2b) ausgebildet ist.

6. Einheit nach Anspruch 5, **dadurch gekennzeichnet, dass** beide Bestandteile (2a, 2b) der Auflage (2) drehgelenkig (Drehachse 10) miteinander verbunden sind.

7. Einheit nach Anspruch 5 oder 6, **dadurch gekennzeichnet, dass** das Formatierungsteil (2a) an seiner gehäusefernen Kante mit einem wahlweise ausziehbaren Verlängerungssteg (11) ausgerüstet ist.

8. Einheit nach einem der Ansprüche 1 bis 7, **dadurch gekennzeichnet, dass** die Auflage (2) verstellbare Seitenanschläge (13) aufweist.

## Claims

1. A unit consisting of an electrical office device (1) for manufacturing documents and an associated document cutting device (2), in particular a laminating device (1) with cutting arrangement (6), wherein
- the office device (1) is equipped with a housing (3) having an inlet (4) as well as a support (2) for carrier material and an outlet (5) for documents manufactured therefrom, wherein further
- the support (2) is configured as a document cutting device (2) detachable from the housing (3), wherein further
- two pairs of locking tongues (7) are realised on the edge of the support (2), which detachably encompass a respective locking pin (8) in a locking recess (9) in the housing (3), and wherein
- by means of a pulling or pushing action in transverse direction (R) the support (2) or the document cutting device (2) can be detachably connected with the housing (3) or disconnected from the housing (3).

2. The unit according to claim 1, **characterised in that** the support (2), when in manufacturing mode, receives the carrier material in its role as a support surface.

3. The unit according to claim 1 or 2, **characterised in that** the support (2), when in cutting mode, acts as a document cutting device (2) separated from the housing (3).

4. The unit according to one of claims 1 to 3, **characterised in that** the support (2) detachably engages with at least one locking element (7) in a counter-locking element (8) in the housing (3), or vice-versa.

5. The unit according to one of claims 1 to 4, **characterised in that** the support (2) is configured in two parts with a formatting part (2a) and a cutting part (2b).

6. The unit according to claim 5, **characterised in that** both components (2a, 2b) of the support (2) are connected with each other via a swivel joint (rotary axis (10).

7. The unit according to claim 5 or 6, **characterised in that** the formatting part (2a) is equipped with an optionally extractable extension bar (11) at its edge remote from the housing.

8. The unit according to one of claims 1 to 7, **characterised in that** the support (2) comprises adjustable side stops (13).

## Revendications

1. Unité constituée d'un appareil de bureau (1) électrique pour la fabrication de documents et d'un appareil de découpage de documents (2) associé, en particulier d'un appareil de laminage (1) avec un dispositif de coupe (6), moyennant quoi
- l'appareil de bureau (1) est équipé d'un boîtier (3) avec une entrée (4) ainsi qu'un appui (2) pour du matériel de support et une sortie (5) pour des documents fabriqués à partir de celui-ci, moyennant quoi
- l'appui (2) est par ailleurs réalisé en tant qu'appareil de découpage de documents (2) pouvant être retiré du boîtier (3), moyennant quoi
- deux paires de languettes d'arrêt (7) prévues du côté du bord de l'appui (2) sont en outre réalisées, lesquelles entourent de manière détachable un tourillon d'arrêt (8) respectif dans un évidement d'arrêt (9) dans le boîtier (3), et moyennant quoi
- par sollicitation en tirant ou poussant dans le sens transversal (R), il est possible de relier de manière détachable respectivement l'appui (2) ou l'appareil de découpage de documents (2) au boîtier (3) ou de de nouveau le séparer du boîtier (3).

2. Unité selon la revendication 1, **caractérisée en ce que**, en mode de fabrication, l'appui (2) accueille le matériel de support à la manière d'une surface de soutien.

3. Unité selon la revendication 1 ou 2, **caractérisée en ce que**, en mode de découpage, l'appui (2) fait office d'appareil de découpage de documents (2) de manière séparée du boîtier (3).

4. Unité selon l'une des revendications 1 à 3, **caractérisée en ce que** l'appui (2) se met en prise détachable avec au moins un élément d'arrêt (7) dans un élément d'arrêt opposé (8) dans le boîtier (3), ou bien inversement.

5. Unité selon l'une des revendications 1 à 4, **caractérisée en ce que** l'appui (2) est réalisé en deux pièces avec une partie de formatage (2a) et une partie de découpage (2b).

6. Unité selon la revendication 5, **caractérisée en ce que** les deux éléments constitutifs (2a, 2b) de l'appui (2) sont reliés ensemble de manière pivotante (axe de rotation 10).

7. Unité selon la revendication 5 ou 6, **caractérisée en ce que** la partie de formatage (2a) est équipée sur son bord éloigné du boîtier d'une nervure de prolongement (11) pouvant être déployée au choix.

8. Unité selon l'une des revendications 1 à 7, **caractérisée en ce que** l'appui (2) présente des butées latérales (13) réglables.
